(19) Europäisches Patentamt
European Patent Office
Office européen des brevets

(11) EP 2 481 770 B1

(12) **EUROPÄISCHE PATENTSCHRIFT**

(45) Veröffentlichungstag und Bekanntmachung des Hinweises auf die Patenterteilung:
**26.06.2019 Patentblatt 2019/26**

(51) Int Cl.:
***C08J 9/00*** (2006.01) ***C08L 75/04*** (2006.01)
***C08G 18/48*** (2006.01) ***C08G 101/00*** (2006.01)

(21) Anmeldenummer: **11194818.8**

(22) Anmeldetag: **21.12.2011**

(54) **Verwendung von Silikonpolyetherblock-Copolymeren mit hochmolekularen nicht endverkappten Polyetherresten als Stabilisatoren zur Herstellung von Polyurethanschäumen niedriger Dichte**

Use of silicon polyether block copolymers with high-molecular non-end capped polyether esters as stabilisers for production of low density polyurethane foams

Utilisation de copolymères à bloc de silicone polyéther avec résidus de polyéther à haut poids moléculaire sans groupe terminal comme stabilisateurs pour la fabrication de mousses de polyuréthane de faible densité

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.01.2011 DE 102011003148**

(43) Veröffentlichungstag der Anmeldung:
**01.08.2012 Patentblatt 2012/31**

(73) Patentinhaber: **Evonik Degussa GmbH**
**45128 Essen (DE)**

(72) Erfinder:
- **Hubel, Roland**
  **45136 Essen (DE)**
- **Terheiden, Annegret**
  **46519 Alpen (DE)**
- **Schiller, Carsten**
  **45470 Mülheim an der Ruhr (DE)**
- **Henning, Frauke**
  **45259 Essen (DE)**
- **Schmitz, Sarah**
  **45130 Essen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A2- 0 585 771**
**US-A- 3 846 462**
**US-A1- 2003 203 984**

EP 2 481 770 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zur Herstellung von Polyurethanschäumen mit einer Dichte von kleiner 24 kg/m$^3$ bei dem ein Silikonpolyetherblock-Copolymer umfassend ein Polyorganosiloxan, welches mindestens einen Polyetherrest aufweist, eingesetzt wird, welches dadurch gekennzeichnet ist, dass mindestens ein nicht endverkappter Polyetherrest an das Polyorganosiloxan gebunden ist, der ein gewichtsmittleres Molgewicht von 6000 bis 8000 g/mol aufweist, und Polyurethanschäume, die durch das Verfahren erhältlich sind, sowie Artikel enthaltend bzw. bestehend aus diesen Schäumen, jeweils nach den Maßgaben der Ansprüche.

Polyurethane unterschiedlicher Art werden durch die Polymerisation von Diisocyanaten wie 4,4'-Methylen-bis(phenylisocyanat), kurz MDI, oder 2,4-Toluoldiisocyanat, kurz TDI, mit Polyetherpolyolen oder Polyesterpolyolen hergestellt. Die hierbei eingesetzten Polyetherpolyole werden durch die Alkoxylierung von polyhydroxyfunktionellen Startern wie z.B. Glykolen, Glycerin, Trimethylolpropan, Pentaerythrit, Sorbit oder Saccharose gewonnen. Bei der Herstellung von Polyurethanschäumen kommen zusätzliche Treibmittel zum Einsatz, wie z. B. Pentan, Methylenchlorid, Aceton oder Kohlendioxid. Unerlässlich für die reproduzierbare technische Herstellung von Schaumteilen ist die Stabilisierung des Polyurethanschaums durch ein Tensid. Abseits von wenigen rein organischen Tensiden werden aufgrund ihres höheren Grenzflächenstabilisierungspotentials meist Silikontenside eingesetzt.

Stand der Technik:

Eine Vielzahl verschiedener Polyurethanschäume, wie beispielsweise Heißweichschaum, Kaltschaum, Esterschaum, PUR-Hartschaum und PIR-Hartschaum sind bekannt. Die hierbei eingesetzten Stabilisatoren sind auf die jeweilige Endanwendung passgenau entwickelt und zeigen üblicherweise eine deutlich veränderte Performance, falls sie bei der Herstellung anderer Schaumarten eingesetzt werden.

Ein Vielzahl von Schriften, wie beispielsweise die EP 0 493 836 A1, US 5,565,194 oder EP 1 350 804 offenbart jeweils speziell zusammengesetzte Polysiloxan-Polyoxyalkylen-Blockmischpolymerisate zur Erfüllung spezifischer Anforderungsprofile für Schaumstabilisatoren in diversen Polyurethanschaumformulierungen. Dabei werden zur Herstellung der jeweiligen Stabilisatoren Gemische aus zwei oder drei bevorzugt endverkappten Allylpolyethern in der Hydrosilylierung eingesetzt, deren Molgewichte kleiner als 6000 g/mol, bevorzugt kleiner als 5500 g/mol, sind. Mittels alkalischer Alkoxylierung sind Polyether mit Molgewichten über 4500 g/mol nicht ohne weiteres zugänglich, da mit zunehmender Kettenlänge Nebenreaktionen dominieren, die den Kettenabbruch fördern.

In US 5,856,369 und US 5,877,268 werden Polyetherpolysiloxane beschrieben, die zwei verschiedene Arten von Polyetherresten aufweisen: Die erste Art Polyetherrest weist eine mittlere Molmasse von mehr als 3000 g/mol auf. Die zweite Art weist eine mittlere Molmasse von 300 bis 3000 g/mol auf. Die durchschnittliche Molmasse aller Polyetherreste beträgt 1100 bis 3000 g/mol. Die Polyetherreste können verkappt oder unverkappt sein. Bevorzugt sind die Polyetherreste endverkappt. Besonders bevorzugt und in den Beispielen ausschließlich beschrieben sind solche Polyetherreste der ersten Art, bei denen die mittlere Molmasse größer 6000 g/mol ist und eine t-Butyl-, Methyl- oder Acetyl-Endverkappung vorliegt.

Wie in US 5,856,369 und US 5,877,268 dargelegt, führt die hohe chemische Reinheit und die hohe Molmasse in Kombination mit geringer Polydispersität der mittels DMC-Katalysatoren hergestellten ungesättigten Polyetherole zu hochaktiven Polyurethanschaumstabilisatoren. Die Anwendbarkeit der beschriebenen meist Allylalkoholgestarteten Polyetherole auf dem Gebiet der PU-Schaumstabilisatoren beschränkt sich jedoch auf eine relativ kleine Gruppe von Polyetherolen, die aus Ethylenoxid- und Propylenoxid-Monomereinheiten in teils statistisch gemischter Abfolge bestehen und in denen der Ethylenoxidanteil nicht über 60 mol-% betragen darf, um die Entstehung von Polyethylenglykol-Blöcken in der Polymerkette zu vermeiden. Die Löslichkeit und damit auch die Wirksamkeit der dort beschriebenen Stabilisatoren sind demnach in Formulierungen mit hydrophileren Polyolen stark eingeschränkt. Neben der universellen Einsetzbarkeit in verschiedenen Formulierungen ist zudem das Verarbeitungsspiel ein wichtiger Faktor für die Güte eines Stabilisators. Ein breites Verarbeitungsspiel bedeutet, dass die Schaumeigenschaften bei Dosageschwankungen der Edukte konstant bleiben. Das Verarbeitungsspiel kann ermittelt werden, indem die Einsatzmengen von Stabilisator und Katalysator variiert werden. Wie dem Fachmann bekannt ist, weisen hochaktive Stabilisatoren, wie beispielsweise die in US 5,856,369 und US 5,877,268 beschriebenen Silikonpolyethercopolymeren, meist ein zu kleines Verarbeitungsspiel auf. Die Patentschriften US 5,856,369, US 5,877,268 und EP 0 712 884 belegen, dass die Verwendung besonders langkettiger Polyether im Polyoxyalkylenteil des Silikonpolyethercopolymers zu höherviskosen Produkten führt, die erst mit Lösungsmitteln abgemischt werden müssen, um eine normale Handhabung zu gewährleisten. In diesen Schriften wird weiterhin der Parameter des molaren Mischungsmolgewichts des Polyethergemisches genannt, welches kleiner als 3000 g/mol, bevorzugt sogar kleiner 2000 g/mol ist, um zu hohe Viskositäten zu vermeiden und um offenzellige Polyurethanschäume zu gewährleisten. Bei den genannten niedrigen Mischungsmolgewichten ist offensichtlich, dass vergleichsweise geringe Anteile von Allylpolyethern mit Molgewichten über 5500 g/mol in der Mischung enthalten sein können.

Insbesondere Polyurethanschaumformulierungen mit niedrigen Dichten stellen hohe Anforderungen an die

Aktivität des Stabilisators sowie an dessen zellverfeinernde und zellöffnende Eigenschaften. Wie dem Fachmann bekannt ist, sind diese beiden gegensätzlichen Eigenschaften meist nur bis zu einem gewissen Grad miteinander vereinbar. Die US 2009-0253817 A1 beschreibt die Verwendung von Silikonpolyethercopolymeren, deren Polyethergemisch aus drei einzelnen Polyethern besteht, nämlich zwei endverkappten Allylpolyethern mit mittleren bis niedrigen Molgewichten im Bereich von 800 g/ml bis maximal 5500 g/mol und einem hydroxyfunktionellen Allylpolyether mit einem Molgewicht von 1400 g/mol bis 2300 g/mol. Wie die in dieser Schrift offenbarten Referenzbeispiele 2.1 und 2.2 zeigen, ist die hohe Aktivität dieser Stabilisatoren mit Einbußen bei der Offenzelligkeit verbunden.

Die Patentanmeldung CN 101099926 A beschreibt endverkappte nicht-ionische Tenside und deren Einsatz in einer nicht offenbarten Polyurethanschaumformulierung, mit der Schäume mittlerer bis niedriger Dichte hergestellt werden. Auch wenn in der Beschreibung prinzipiell die Verwendung endverkappter Polyether mit Molgewichten bis zu 9500 g/mol genannt ist, so beschreiben die offenbarten Beispiele lediglich die Verwendung von methylierten Allylpolyethern mit Molgewichten von 1000 bis 4500 g/mol. Wie die in dieser Schrift offenbarten Referenzbeispiele 2.3 und 2.4 zeigen, weisen die in der CN 101099926 offenbarten Stabilisatoren die Nachteile auf in Schäumen niedriger Dichte entweder zu grober Zellstruktur oder aufgrund fehlender ausreichend stabilisierender Eigenschaften direkt zum Schaumkollaps zu führen.

EP 0 585 771 A2 beschreibt ein Polysiloxan-Polyoxyalkylen-Blockmischpolymerisat mit unterschiedlichen Polyoxyalkylenblöcken im durchschnittlichen Molekül, wobei das Gemisch der Polyoxyalkylenblöcke aus mindestens einem Polyoxyalkylenrest A und mindestens einem Polyoxyalkylenrest B und/oder mindestens einem Polyoxyalkylenrest C bestehen, wobei jeder Polyoxyalkylenrest A ein mittleres Molgewicht von 600 bis 5500 hat und aus 20 bis 90 Gew.-% Oxyethyleneinheiten und 80 bis 10 Gew.-% Oxypropyleneinheiten besteht, Polyoxyalkylenrest B ein mittleres Molgewicht von 500 bis 5000 hat und aus 2 bis 19 Gew.-% Oxyethyleneinheiten und 98 bis 81 Gew.-% Oxypropyleneinheiten besteht, Polyoxyalkylenrest C ein mittleres Molgewicht von 1500 bis 4500 hat und aus Oxypropyleneinheiten besteht, wobei jeweils bis zu 20 Gew.-% der Oxypropyleneinheiten durch Oxybutyleneinheiten ersetzt sein können, und wobei das Molverhältnis der Polyoxyalkylenreste A zu der Summe der Polyoxyalkylenreste B und C 1 : 4 bis 4 : 1 beträgt.

US 2003/203984 A1 offenbart ein Verfahren zur Herstellung von PU-Schaum, bei dem eine Silikon/Polyether-Zusammensetzung mit Blockcopolymerstruktur eingesetzt wird, welche auch unverkappte Polyetherreste aufweisen kann.

Ausgehend vom Stand der Technik bestand die Aufgabe der vorliegenden Erfindung darin, Silikonpolyetherblock-Copolymere mit einem ausgewogenen Eigenschaftsprofil hinsichtlich der Stabilisierung von Polyurethanschäumen mit mittlerer bis niedriger Dichte (kleiner 24 kg/$m^3$) bereit zu stellen, die vorzugsweise einfach zugänglich sind.

Überraschenderweise wurde gefunden, dass diese Aufgabe durch ein Verfahren, wie es in den Ansprüchen definiert ist, gelöst wird.

Gegenstand der vorliegenden Erfindung ist deshalb ein Verfahren zur Herstellung von Polyurethanschäumen mit einer Dichte von kleiner 24 kg/$m^3$ bei dem ein Silikonpolyetherblock-Copolymer umfassend ein Polyorganosiloxan, welches mindestens einen Polyetherrest aufweist, eingesetzt wird, welches dadurch gekennzeichnet ist, dass mindestens ein nicht endverkappter Polyetherrest an das Polyorganosiloxan gebunden ist, der ein Molgewicht von 6000 bis 8000 g/mol aufweist, wobei die Bestimmung der Dichte erfolgt wie in ASTM D 3574 - 08 unter Test A beschrieben, wobei das Molgewicht Mw durch Gelpermeationschromatographie unter den folgenden Messbedingungen bestimmt wird: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

Außerdem sind Gegenstände der vorliegenden Erfindung Polyurethanschäume, erhältlich durch das erfindungsgemäße Verfahren, sowie Artikel enthaltend oder bestehend aus diesem erfindungsgemäßen Polyurethanschaum.

Weitere Gegenstände der Erfindung sind gekennzeichnet durch die Inhalte der Unteransprüche, deren Inhalt vollumfänglich Teil des Offenbarungsgehalts der vorliegenden Beschreibung ist.

Die erfindungsgemäß verwendeten Silikonpolyetherblock-Copolymere haben den Vorteil, dass die zu ihrer Herstellung verwendeten Polyether auf einfache Weise aus über DMC-Katalyse erhaltene Allylpolyether gewonnen werden können, so dass nur ein geringer Anteil an nicht verwertbarem Propenylpolyether erhalten wird.

Die erfindungsgemäß verwendeten Silikonpolyetherblock-Copolymeren haben außerdem den Vorteil, dass bei Ihrer Herstellung auf einen aufwändigen/zusätzlichen Schritt der Endverkappung verzichtet werden kann.

Die erfindungsgemäß verwendeten Silikonpolyetherblock-Copolymeren haben außerdem den Vorteil, dass bei Ihrer Herstellung auf einen aufwändigen/zusätzlichen Schritt der Neutralisation und/oder Filtration verzichtet werden kann.

Die erfindungsgemäße Verwendung von Silikonpolyetherblock-Copolymeren hat weiterhin den Vorteil, dass bereits geringe Einsatzmengen der Copolymeren zur Herstellung von fein- und offenzelligen Polyurethanheißweich- und hartschäumen mit niedrigen Dichten ausreichend sind.

Bei gegenüber dem Stand der Technik gleichen Einsatzmengen hat die erfindungsgemäße Verwendung von Silikonpolyetherblock-Copolymeren ferner den Vorteil, dass eine deutlich feinere Zellstruktur bei gleicher Offenzelligkeit vor allem bei Schäumen mit einer Dichte von kleiner 12 kg/$m^3$, bevorzugt kleiner 10kg/$m^3$ erhalten wird.

Bei gleicher Abmischung des Konzentrats mit einem Lösemittel (z.B. Dipropylenglykol) gegenüber dem Stand der Technik kann der prozentuale Silikonanteil im erfindungsgemäßen Silikonpolyetherblock-Copolymer und damit die Kosten verringert werden.

Die erfindungsgemäße Verwendung von Silikonpolyetherblock-Copolymeren hat weiterhin den Vorteil, dass insbesondere bei Hartschaumanwendungen wie Sprühschaum und Verpackungsschaum durch die Verwendung der nicht endverkappte hochmolekulare Polyether enthaltenden Polyethersiloxane eine erhöhte Phasenkompatibilität in der Polyolkomponente des Polyurethansystems und damit im Vergleich zu den gemäß des Standes der Technik eingesetzten endverkappte Polyether enthaltende Polyethersiloxanen erzielt wird.

Die erfindungsgemäße Verwendung von Silikonpolyetherblock-Copolymeren hat ferner den Vorteil, dass bei oben beschriebenen Hartschaumanwendungen durch die Verwendung der nicht endverkappte hochmolekulare Polyether enthaltenden Polyethersiloxane eine verbesserte Zellstruktur, geringere Lunkerrate und verringerte Wärmeleitfähigkeit im Vergleich zu den gemäß des Standes der Technik auch eingesetzten nicht-endverkappte Polyether enthaltende Polyethersiloxanen erhalten wird.

Die erfindungsgemäß verwendeten Silikonpolyetherblock-Copolymere und deren Herstellung werden nachfolgend beispielhaft beschrieben. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel.

Im Rahmen der vorliegenden Erfindung werden unter Polyurethanschäumen mit mittlerer Dichte solche Polyurethanschäume verstanden, die eine Dichte von kleiner 24 kg/$m^3$ aufweisen und unter Polyurethanschäumen mit geringer Dichte solche Polyurethanschäume verstanden, die eine Dichte von kleiner 15,8 kg/$m^3$ aufweisen. Die Bestimmung der Dichte erfolgt wie in ASTM D 3574 - 08 unter Test A beschrieben.

Das nachfolgend angegebene gewichtsmittlere Molgewicht aller an das Polyorganosiloxan chemisch gebundenen Polyetherreste $MG_{Mischung}$ ist definiert als die Summe der Produkte aus den prozentualen molaren Anteilen des jeweiligen Polyetherrests in der Mischung, $f_{molar}$, und dessen individuellen Molgewicht, $MG_{Polyether}$. (Formel X)

$$MG_{Mischung} = \sum\left[f_{molar} \times MG_{Polyether}\right] \qquad \text{Formel X}$$

Das erfindungsgemäße Verfahren zur Herstellung von Polyurethanschäumen mit einer Dichte von kleiner 24 kg/$m^3$, vorzugsweise kleiner 20 kg/$m^3$, bevorzugt kleiner 15,8 kg/$m^3$, besonders bevorzugt kleiner 13 kg/$m^3$ und bevorzugt von 3,5 bis 12 kg/$m^3$ bei dem ein Silikonpolyetherblock-Copolymer umfassend ein Polyorganosiloxan, welches mindestens einen Polyetherrest aufweist, eingesetzt wird, zeichnet sich dadurch aus, dass mindestens ein nicht endverkappter Polyetherrest (Polyetherrest der eine freie OH-Gruppe aufweist) an das Polyorganosiloxan gebunden ist, der ein Molgewicht von 6000 bis 8000 g/mol aufweist, nach den Maßgaben des Anspruchs 1.

Das gewichtsmittlere Molgewicht aller an das Polyorganosiloxan chemisch gebundenen Polyetherreste beträgt vorzugsweise größer 1500 g/mol, bevorzugt größer 2000 g/mol und besonders bevorzugt von größer 3000 bis kleiner 5000 g/mol.

Vorzugsweise ist in den erfindungsgemäß verwendeten Silikonpolyetherblock-Copolymeren neben dem Polyetherrest, der ein Molgewicht von 6000 bis 8000 g/mol, mindestens ein Polyetherrest, der ein Molgewicht von kleiner 4500 g/mol, bevorzugt kleiner 4000 g/mol aufweist, an das Polyorganosiloxan chemisch gebunden.

Die erfindungsgemäß verwendeten Silikonpolyetherblock-Copolymere sind vorzugsweise solche, die der Formel (I) genügen:

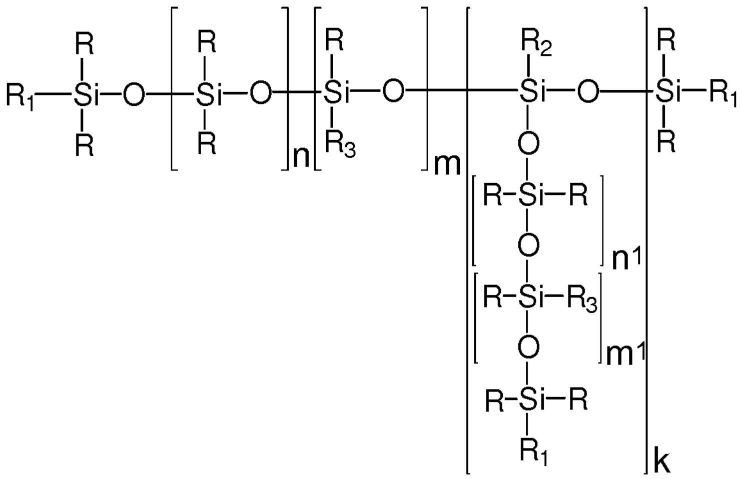 ( I )

worin

n und $n^1$ unabhängig voneinander 0 bis 500, vorzugsweise 10 bis 200, insbesondere 15 bis 100 sind und $(n+n^1) <$ 500, vorzugsweise < 200, insbesondere < 100 ist,
m und $m^1$ unabhängig voneinander 0 bis 60, vorzugsweise 0 bis 30, insbesondere 0,1 bis 25 sind und $(m+m^1) <$ 60 ist, vorzugsweise < 30, insbesondere < 25 ist,
k = 0 bis 50 ist, vorzugsweise 0 bis 10 ist, insbesondere 0 oder von 1 bis 5 ist,
R = gleiche oder ungleiche Reste aus der Gruppe umfassend lineare, cyclische oder verzweigte, aliphatische oder aromatische, gesättigte oder ungesättigte Kohlenwasserstoffreste mit 1 bis zu 20 C-Atomen,
$CH_2-R^{IV}$,
$CH_2-CH_2-(O)_{x'}-R^{IV}$,
$CH_2-CH_2-CH_2-O-CH_2-CH(OH)-CH_2OH$,

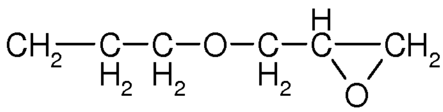

und
$CH_2-CH_2-CH_2-O-CH_2-C(CH_2OH)_2-CH_2-CH_3$,

mit

x' gleich 0 oder 1 und
$R^{IV}$ ein gegebenenfalls substituierter, gegebenenfalls mit Halogenen substituierter Kohlenwasserstoffrest mit 1 bis 50 Kohlenstoffatomen, wobei R vorzugsweise ein Methylrest ist, wobei besonders bevorzugt alle Reste R Methylreste sind,
$R_1$ = R oder $R_3$ oder $R_7$ ist,
$R_2$ = R oder $R_3$ oder $R_7$ oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist,
$R_3 = -Q-O-(CH_2-CH_2O-)_x-(CH_2-CH(R')O-)_y-(SO)_z-R''$
oder
$-Q-O-(CH_2-CH_2O-)_x-(CH_2-CH(R')O-)_y-R''$,
mit
Q = zweiwertiger Kohlenwasserstoffrest mit 2 bis 4 Kohlenstoffatomen, vorzugsweise $Q = -CH_2-CH_2-CH_2-$ oder $-CH_2-CH_2-$
SO = Styroloxid-Einheit,
x = 0 bis 200, vorzugsweise 5 bis 140, bevorzugt 10 bis 100,
y = 0 bis 200, vorzugsweise 5 bis 140, bevorzugt 10 bis 100,

z = 0 bis 100, vorzugsweise 0 bis 10,
R' = gleiche oder verschiedene, unsubstituierte oder gegebenenfalls substituierte, beispielsweise mit Alkylresten, Arylresten oder Halogenalkyl- oder Halogenarylresten substituierte, Alkyl- oder Arylgruppe mit insgesamt 1 bis 12 C-Atomen, vorzugsweise eine Methyl- oder Ethylgruppe, bevorzugt eine Methylgruppe und R'' einen Wasserstoffrest oder eine Alkylgruppe mit 1 bis 4 C-Atomen, eine Gruppe -C(O)-R''' mit R''' = Alkylrest, eine Gruppe $-CH_2-O-R'$, eine Alkylarylgruppe, wie z. B. eine Benzylgruppe, eine Gruppe -C(O)-O-R'''' mit R'''' = Alkylrest oder Alkylaryl, die Gruppe -C(0)-OR' oder die Gruppe -C(O)NH-R', vorzugsweise einen Wasserstoffrest oder einen Methyl-, Butyl- oder Acetylrest bedeutet,
SO ein Styroloxid-Rest $-CH(C_6H_5)-CH_2-O-$ ist,
$R_7$ = verzweigter Polyetherrest oder Vernetzerrest, wie er sich z.B. aus Diallylverbindungen bzw. umgesetzten Diallylverbindungen ableitet,
mit der Maßgabe, dass mindestens ein Rest $R_3$ vorhanden ist, bei dem der Rest $R_3$ ein Polyetherrest mit einem Molgewicht größer-gleich 4500 g/mol ist und bei dem R" = H ist, und dass $n + n^1 + m + m^1$ größer-gleich 10, vorzugsweise 30 und bevorzugt größer-gleich 50 ist.

Die verschiedenen Monomereinheiten der Polyorganosiloxankette und auch der Polyoxyalkylenkette können untereinander blockweise aufgebaut sein oder einer statistischen Verteilung unterliegen. Die in den hier angeführten Formeln wiedergegebenen Indexzahlen und die Wertbereiche der angegebenen Indizes verstehen sich daher als die Mittelwerte der möglichen statistischen Verteilung der tatsächlichen isolierten Strukturen und/oder deren Mischungen.

Es kann vorteilhaft sein, wenn bei allen Polyetherresten $R_3$ mit einem Molgewicht größer-gleich 4500 g/mol R" gleich Wasserstoff ist. Es kann außerdem vorteilhaft sein, wenn bei allen Polyetherresten $R_3$ mit einem Molgewicht kleiner 4500 g/mol R" ungleich Wasserstoff ist. Bevorzugt ist bei allen Polyetherresten $R_3$ mit einem Molgewicht größer-gleich 4500 g/mol R" gleich Wasserstoff und bei allen Polyetherresten $R_3$ mit einem Molgewicht kleiner 4500 g/mol R" ungleich Wasserstoff.

Die erfindungsgemäß verwendeten Silikonpolyetherblock-Copolymere sind erhältlich durch Organomodifizierung von verzweigten oder linearen Polyorganosiloxanen mit endständigen und/oder seitenständigen SiH-Funktionen, mit einem Polyether oder einem Polyethergemisch aus mindestens zwei Polyethern, welche sich dadurch auszeichnen, dass der eingesetzte Polyether oder das eingesetzte Polyethergemisch mindestens einen nicht endverkappten Polyether mit einem Molgewicht von 6000 bis 8000 g/mol ist oder enthält. Das mittlere Molgewicht aller eingesetzten Polyether ist vorzugsweise größer 1500 g/mol, bevorzugt größer 2000 und besonders bevorzugt größer 3000 bis kleiner 5000. Als Polyether werden bevorzugt solche eingesetzt, die eine Vinylendgruppe enthaltende Endgruppe, insbesondere eine Allylgruppe, aufweisen.

Die erfindungsgemäß eingesetzten Silikonpolyetherblock-Copolymere können auf verschiedene Weise unter Verwendung von aus dem Stand der Technik bekannten Verfahrensschritten erhalten werden.

Die Herstellung der eingesetzten Silikonpolyetherblock-Copolymere kann nach einem Verfahren erfolgen, bei dem verzweigte oder lineare Polyorganosiloxane mit endständigen und/oder seitenständigen SiH-Funktionen, mit einem Polyether oder einem Polyethergemisch aus mindestens zwei Polyethern umgesetzt werden, wobei der eingesetzte Polyether oder das eingesetzte Polyethergemisch mindestens ein(en) Polyether mit einem Molgewicht größer 5999 g/mol, ist oder enthält und das mittlere Molgewicht aller eingesetzten Polyether größer 1499 g/mol, vorzugsweise größer 1999 g/mol, bevorzugt größer 2999 bis 4999 g/mol ist. Als Polyether kommen vorzugsweise solche zum Einsatz, die eine Vinylendgruppe enthaltende Endgruppe, insbesondere eine Allylgruppe, enthalten.

Die Umsetzung wird vorzugsweise als edelmetallkatalysierte Hydrosilylierung, bevorzugt wie in 1 520 870 beschrieben durchgeführt.

In dem Verfahren zur Herstellung der eingesetzten Silikonpolyetherblock-Copolymere werden vorzugsweise Polyorganosiloxane mit endständigen und/oder seitenständigen SiH-Funktionen, der Formel (II) eingesetzt,

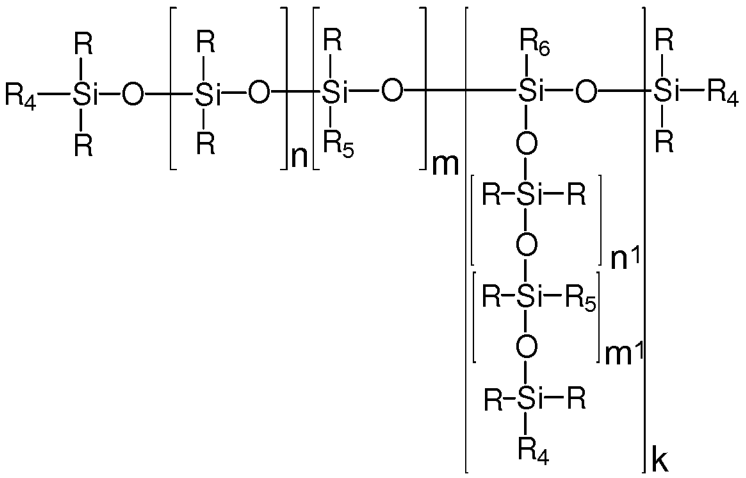 (II)

worin

n und $n^1$ unabhängig voneinander 0 bis 500, vorzugsweise 10 bis 200, insbesondere 15 bis 100 sind und $(n+n^1) < 500$, vorzugsweise $< 200$, insbesondere $< 100$ ist,
m und $m^1$ unabhängig voneinander 0 bis 60, vorzugsweise 0 bis 30, insbesondere 0,1 bis 25 sind und $(m+m^1) < 60$, vorzugsweise $< 30$, insbesondere $< 25$ ist,
k = 0 bis 50, vorzugsweise 0 bis 10 und insbesondere 0 oder 1 bis 5 ist,

R wie oben definiert
$R_4$ unabhängig voneinander Wasserstoff oder R ist,
$R_5$ unabhängig voneinander Wasserstoff oder R ist,
$R_6$ unabhängig voneinander Wasserstoff, R oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist,

mit der Maßgabe, dass mindestens einer der Reste $R_4$, $R_5$ und $R_6$ ein Wasserstoff ist.

Die bei der Herstellung der Polysiloxan-Polyoxyalkylen-Blockmischpolymerisate verwendeten Polyorganosiloxane mit endständigen und/oder seitenständigen SiH-Funktionen der Formel (II) können wie im Stand der Technik, beispielsweise in der EP 1439200 B1 und DE 10 2007 055485 A1 beschrieben, hergestellt werden.

Die verwendeten ungesättigten Polyoxyalkylene (Polyether mit einer Vinyl-, insbesondere Allylendgruppe) können nach dem literaturbekannten Verfahren der alkalischen Alkoxylierung von einem eine Vinylgruppe aufweisenden Alkhohol, insbesondere Allylalkohol, oder unter Verwendung von DMC-Katalysatoren wie im Stand der Technik, beispielsweise in der DE 10 2007 057145 A1 beschrieben, hergestellt werden.

Bevorzugt eingesetzte ungesättigte Polyoxyalkylene sind solche der Formel (III)

$$Q'\text{-}O\text{-}(CH_2\text{-}CH_2O\text{-})_x\text{-}(CH_2\text{-}CH(R')O\text{-})_y\text{-}(SO)_z\text{-}R'' \qquad (III)$$

Q' = $CH_2$=CH-$CH_2$- oder $CH_2$=CH- und SO, R', R'', x, y und z wie oben definiert, mit der Maßgabe, dass die Summe aus x+y+z ungleich 0 ist und vorzugsweise so gewählt wird, dass die oben genannten gewichtsmittleren Molekulargewichte erreicht werden.

Die Silikonpolyether-Copolymere können in dem erfindungsgemäßen Verfahren allein oder in Form einer Zusammensetzung eingesetzt werden. Bevorzugte Zusammensetzungen enthalten ein oder mehrere der Silikonpolyether-Copolymere und zeichnen sich dadurch aus, dass sie des weiteren eine oder mehrere bei der Herstellung von Polyurethanschäumen verwendbare Substanzen, ausgewählt aus Polyol, Nukleierungsmitteln, zellverfeinernden Additiven, Zellöffnern, Vernetzern, Emulgatoren, Flammschutzmitteln, Antioxidantien, Antistatika, Bioziden, Farbpasten, festen Füllstoffen, Katalysatoren, insbesondere Aminkatalysatoren und/oder Metallkatalysatoren und Puffersubstanzen, enthalten. Es kann vorteilhaft sein, wenn die erfindungsgemäß eingesetzte Zusammensetzung ein oder mehrere Lösungsmittel, vorzugsweise ausgewählt aus Glykolen, Alkoxylaten oder Ölen synthetischer und/oder natürlicher Herkunft, enthält.

Das erfindungsgemäße Verfahren zur Herstellung des Polyurethanschaums ist bis auf die Verwendung der

speziellen Silikonpolyether-Copolymere nicht kritisch und kann deshalb wie im Stand der Technik beschrieben durchgeführt werden.

Nachstehend sind eine Reihe von Schutzrechten angegeben, die geeignete Komponenten und Verfahren zur Herstellung der unterschiedlichen Polyurethanweichschaumstoff-Typen, d.h. Heiß-, Kalt- sowie Ester-Polyurethanweichschaumstoffe beschreiben, auf die im vollen Umfang Bezug genommen wird: EP 0152878 A1; EP 0409035 A2; DE 102005050473 A1; DE 19629161 A1; DE 3508292 A1; DE 4444898 A1; EP 1061095 A1; EP 0532939 B1; EP 0867464 B1; EP1683831 A1; DE102007046860 A1.

Weitere Angaben zu verwendbaren Ausgangsstoffen, Katalysatoren sowie Hilfs- und Zusatzstoffen finden sich beispielsweise im Kunststoff-Handbuch, Band 7, Polyurethane, Carl-Hanser-Verlag München, 1. Auflage 1966, 2. Auflage, 1983 und 3. Auflage, 1993.

PU-Schäume und deren Herstellung sind allgemein z. B. in Ullmann's Encyclopedia of Industrial Chemistry, Stichwort Polyurethanes, Published Online: 15 JAN 2005, DOI: 10.1002/14356007.a21_665.pub2, Wiley-VCH Verlag GmbH & Co. KGaA, Weinheim und in der dort zitierten Literatur beschrieben.

Die erfindungsgemäß eingesetzten Silikonpolyetherblock-Copolymere werden vorzugsweise als Schaumstabilisator in dem erfindungsgemäßen Verfahren eingesetzt. Die Silikonpolyetherblock-Copolymeren, insbesondere solche der Formel (I) eignen sich besonders bevorzugt als Polyurethanschaumstabilisatoren bei der Herstellung von beispielsweise Polyurethan-Weichschaum, -Heißweichschaum, -Hartschaum, -Kaltschaum, -Esterschaum, viscoelastischem Weichschaum oder auch High Resilience-Schaum (HR-Schaum), ganz besonders bevorzugt als Polyurethan-Heißweichschaumstabilisatoren und Polyurethan-Hartschaumstabilisatoren.

Vorzugsweise werden in dem erfindungsgemäßen Verfahren zur Herstellung von Polyurethanschaum Wasser, Methylenchlorid, Pentan, Alkane, halogenierte Alkane, Aceton und/oder Kohlendioxid, vorzugsweise Wasser, Pentan, Cyclopentan oder Kohlendioxid als Treibmittel, eingesetzt.

Mittels des erfindungsgemäßen Verfahrens sind erfindungsgemäße Polyurethanschäume erhältlich. Diese erfindungsgemäßen Polyurethanschäume zeichnen sich dadurch aus, dass sie die speziellen Silikonpolyether-Copolymere aufweisen.

Mit dem erfindungsgemäßen Polyurethanschaum sind Artikel zugänglich, die diesen Polyurethanschaum enthalten oder aus ihm bestehen. Solche Artikel können z. B. Möbelpolster, Kühlschrankisolierungen, Sprühschäume, Metallverbundelemente für die (Bau-)Isolierung, Matratzen oder Autositzen sein. Die Auflistungen sind als überlappend anzusehen und als nicht abschließend zu verstehen.

Der Gegenstand der vorliegenden Erfindung wird nachfolgend an Hand von Beispielen näher erläutert, ohne dass der Gegenstand der Erfindung auf diese beispielhaften Ausführungsformen beschränkt sein soll.

**Beispiele:**

**Beispiel 0: Herstellung von Silikonpolyetherblock-copolymeren**

Die Herstellung der Polyether erfolgt gemäß den bekannten Methoden des Standes der Technik. Die Bestimmung der Molgewichte $M_n$ und $M_w$ erfolgt durch Gelpermeationschromatographie unter den folgenden Messbedingungen: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

Verwendete Polyether gemäß Formel (III) jeweils mit Q = $CH_2$=CH-$CH_2$- und R' = -$CH_3$:

PE1: R'' = H, z = 0, x = 16, y = 12, $M_w$ = 1459 g/mol
PE2: R'' = C(O)-$CH_3$, z = 0, x = 16, y = 12, $M_w$ = 1484 g/mol
PE3: R'' = C(O)-$CH_3$, z = 0, x = 40, y = 30, $M_w$ = 3832 g/mol
PE4: R'' = H, z = 0, x = 57, y = 60, $M_n$ = 5226 g/mol, Mw = 6872 g/mol
PE5: R'' = $CH_3$, z = 0, x = 17.7, y = 23.6, $M_w$ = 2206 g/mol
PE6: R'' = $CH_3$, z = 0, x = 47, y = 49, $M_w$ = 4983 g/mol PE7: R'' = H, z = 0, x = 78, y = 81, $M_n$ = 7032 g/mol, Mw = 9871 g/mol
PE8: R'' = H, z = 0, x = 10, y = 16, $M_w$ = 1373 g/mol

Die Herstellung der Wasserstoffsiloxane erfolgt wie in der EP 1439200 B1 im erfindungsgemäßen Beispiel 1 beschrieben. Die verwendeten Wasserstoffsiloxane sind gemäß Formel (II) wie folgt definiert.

SIL1: $R_4$ = R = $CH_3$, $R_5$ = H, k = 0, n = 70, m = 5
SIL2: $R_4$ = R = $CH_3$, $R_5$ = H, k = 0, n = 69, m = 8
SIL3: $R_4$ = R = $CH_3$, $R_5$ = H, k = 0, n = 89, m = 6,5
SIL4: $R_4$ = R = $CH_3$, $R_5$ = H, k = 0, n = 74, m = 4,0

Die Herstellung der in Tabelle 1 und Tabelle 2 aufgeführten Polyethersiloxane erfolgt wie in der WO 2009/065644 in Beispiel 7 beschrieben.

Tabelle 1: Erfindungsgemäße Silikonpolyetherblock-Copolymere

| Beispiel Nr. | Siloxan | Menge | Einwaagen der einzelnen Polyether | | | $MG_{Mischung}$ | Aussehen des Polyethersiloxans |
|---|---|---|---|---|---|---|---|
| 0.1* | SIL3 | 41,0 g | 11,7 g PE2 | 33,4 g PE8 | 146,1 g PE4 | 3898 g/mol | leicht trüb |
| 0.2 | SIL3 | 39,0 g | 11,0 g PE2 | 31,4 g PE8 | 155,2 g PE7 | 4295 g/mol | leicht trüb |
| 0.3 | SIL4 | 41,0 g | 127,6 g PE7 | 35,6 g PE1 | - | 4372 g/mol | leicht trüb |
| * Bsp. 0.1: Referenzbeispiel, nicht erfindungsgemäß | | | | | | | |

Tabelle 2: Nicht erfindungsgemäße Silikonpolyetherblock-Copolymere

| Beispiel Nr. | Siloxan | Menge | Einwaagen der einzelnen Polyether | | | $MG_{Mischung}$ | Aussehen des Polyethersiloxans |
|---|---|---|---|---|---|---|---|
| V.1 | SIL1 | 63,2 g | 19,2 g PE1 | 62,0 g PE2 | 105,6 g PE3 | 2264 g/mol | klar |
| V.2 | SIL1 | 63,2 g | 38,3 g PE1 | 42,9 g PE2 | 105,6 g PE3 | 2258 g/mol | klar |
| V.3 | SIL2 | 40,0 g | 104,3 g PE5 | 138,4 g PE6 | - | 3227 g/mol | Klar |
| V.4 | SIL2 | 40,0 g | 132,5 g PE5 | 74,8 g PE6 | - | 2761 g/mol | Klar |

**Beispiele 1 bis 6: Herstellung von Polyurethanschäumen unter Verwendung von Stabilisatoren, die hochmolekulare Polyether enthalten**

Zur Herstellung der Polyurethanschäume niedriger Dichte wurde folgende Rezeptur verwendet: 100 Gew.-Teile Polyetherol (Hydroxylzahl = 56 mg KOH/g), 11 Gew.-Teile Wasser, 10 Gew.-Teil Silikonstabilisator, 0,9 Gew.-Teile eines tertiären Amins (TEGOAMIN® SMP der Evonik Goldschmidt GmbH), 140 Gew.-Teile Toluoldiisocyanat T 80 (Index 122), 90 Gew.-Teile Methylenchlorid, sowie 1 Gew.-Teil an KOSMOS® 29 (Evonik Goldschmidt GmbH).

Bei der Verschäumung wurden 80 g Polyol eingesetzt, die anderen Formulierungsbestandteile wurden entsprechend umgerechnet.

Zur Verschäumung wurden das Polyol, Wasser, Amin, Zinnkatalysator und Silikonstabilisator unter Rühren gut vermischt. Nach gleichzeitiger Zugabe von Methylenchlorid und Isocyanat wurde mit einem Rührer 7 Sek. bei 2500 U / min gerührt. Das erhaltene Gemisch wurde in einen mit Papier ausgekleideten Holzkasten (Grundfläche 27 cm x 27 cm) gegossen. Es entstand ein Schaumstoff, der den nachfolgend beschriebenen anwendungstechnischen Tests unterzogen wurde.

Vergleichend wurden Schäume niedriger Dichte unter Verwendung eines konventionellen Stabilisators hergestellt, welcher durchaus zur Verschäumung in niedrigen Dichten geeignet ist, jedoch lediglich Polyether mit Molekulargewicht < 4000 g/mol aufweist.

**Physikalische Eigenschaften der Schäume**

Die hergestellten Schäume wurden anhand folgender physikalischer Eigenschaften beurteilt:

a) Steigzeit:
Zeitdifferenz zwischen Eingießen der Eduktmischung und Abblasen des Polyurethanschaumstoffes.
b) Rücksacken des Schaumstoffes nach dem Ende der Steigphase (= Rückfall):

Der Rückfall, bzw. das Nachsteigen ergibt sich aus der Differenz der Schaumhöhe nach direktem Abblasen und nach 3 min. nach Abblasen des Schaums. Die Schaumhöhe wird dabei durch eine an einem Zentimetermaß befestigte Nadel auf dem Maximum in der Mitte der Schaumkuppe gemessen.

c) Schaumhöhe:

Die Endhöhe des Schaums wird dadurch bestimmt, dass der Rückfall bzw. das Nachsteigen von bzw. zu der Schaumhöhe nach dem Abblasen subtrahiert bzw. addiert wird.

d) Zellstruktur:

Eine horizontale 0,8 cm dicke Schaumscheibe wird 10 cm vom Boden des Schaumkörpers herausgeschnitten und visuell mit fünf Standardschaumscheiben verglichen, die verschiedene Zellstrukturqualitäten aufweisen. Die Kennzeichnung 1 beschreibt starke Vergröberung insbesondere im Randbereich, während die Kennzeichnung 5 eine regelmäßige, feine Zelle wiedergibt.

Die Ergebnisse sind in Tabelle 3 zusammengefasst.

Tabelle 3: Verschäumungsergebnisse der Beispielschäume 1-6

| Bsp. Nr. | Silikonpolyether | Steigzeit [s] | Rückfall [cm] | Schaumhöhe [cm] | Zellstruktur Bewertung |
|---|---|---|---|---|---|
| 1* | 0.1 | 92 | 1,0 | 37,1 | 3 - 4 |
| 2 | 0.2 | 95 | 1,2 | 36,7 | 4 - 5 |
| 3 | V.1 | 101 | 1,6 | 35,9 | 3 |
| 4 | V.2 | 94 | 1,4 | 37,5 | 3 - 4 |
| 5 | V.3 | 110 | 1,9 | 33,4 | 2 - 3 |
| 6 | V.4 | 117 | - | - | Kollaps |
| * Bsp. 1: Referenzbeispiel, nicht erfindungsgemäß | | | | | |

Wie aus Tabelle 3 ersichtlich ist, verbessert sich die Zellstruktur gravierend durch Verwendung von Schaumstabilisatoren, die hochmolekulare, nicht endverkappte Polyether enthalten (Beispiel-Nr. 0.1 & 0.2). Die Verwendung von Polyethern eines Molekulargewichts um 8000 g/mol lässt es zu, Stabilisatoren herzustellen, die die Schaumqualität erheblich verbessern und eine Bewertung von 4 bis 5 erhalten. Zudem wird der Rückfall des Schaumes bei der Verwendung langkettiger Polyether drastisch reduziert und dadurch eine bessere Schaumausbeute erhalten. Dies spricht ebenfalls für eine verbesserte Stabilisierungseigenschaft der neuartigen Strukturen insbesondere für Verschäumungen in niedriger Dichte.

**Beispiel 7 bis 14: Herstellung von flammgeschützten Polyurethanschäumen unter Verwendung von Stabilisatoren, die hochmolekulare Polyether enthalten**

Zur Herstellung der flammgeschützten Polyurethanschäume wurde folgende Rezeptur verwendet: 100 Gew.-Teile Polyetherol (Hydroxylzahl = 48 mg KOH/g), 4,4 Gew.-Teile Wasser, 1,5 Gew.-Teile Silikonstabilisator, 0,15 Gew.-Teile eines tertiären Amins (TEGOAMIN B75 der Evonik Goldschmidt GmbH), 55 Gew.-Teile Toluoldiisocyanat T 80 (Index 110), eine variable Menge an FR-Additiv, sowie 0,2 Gew.-Teile KOSMOS® 29 (Evonik Goldschmidt GmbH). Bei der Verschäumung wurden 300 g Polyol eingesetzt, die anderen Formulierungsbestandteile wurden entsprechend umgerechnet.

Zur Verschäumung wurden das Polyol, Wasser, Amin, Zinnkatalysator, Flammschutz-Additiv und Silikonstabilisator unter Rühren gut vermischt. Nach Zugabe von Isocyanat wurde mit einem Rührer 7 Sek. bei 2500 U / min gerührt. Das erhaltene Gemisch wurde in einen mit Papier ausgekleideten gelochten Metallkasten (Grundfläche 40 cm x 16 cm) gegossen. Es entstand ein Schaumstoff, der Flammtests nach der Methode CALIFORNIA-Test T.I.B 117 (CAL 117) unterzogen wurde. In Tabelle 4 sind die Ergebnisse der Flammtests unter Verwendung halogenierter und nicht-halogenierter Flammschutzmittel der Beispielschäume 7 bis 14 zusammengefasst.

Tabelle 4: Ergebnisse des Flammtests CAL 117 (nach technical information bulletin 177 section A part 1) unter Verwendung halogenierter und nicht-halogenierter Flammschutzadditive.

| | | FR-Additiv | | CAL 117 |
|---|---|---|---|---|
| Bsp. Nr. | Silikonpolyether | Typ | Einsatzmenge [pphp] | Brennlänge* [in] |
| 7*** | 0.1 | TCPP | 9 | 7,6 |
| 8*** | 0.1 | nicht halogeniert | 16 | 11,7 |
| 9 | 0.2 | TCPP | 9 | 7,1 |
| 10 | 0.2 | nicht halogeniert | 16 | 8,9 |
| 11 | V.1 | TCPP | 9 | -** |
| 12 | V.1 | nicht halogeniert | 16 | Risse |
| 13 | V.2 | TCPP | 9 | -** |
| 14 | V.2 | nicht halogeniert | 16 | -** |

TCPP = Tris(chloropropyl)phosphat
Nicht halogeniert = halogenfreier Phosphorester mit 8,1 Gew.%-Phosphoranteil (Fyrol® HF-4, der Firma ICL Industrial Products)
* Durchschnittswerte von fünf Brenntests
** vollständig abgebrannt
*** Bsp. 7 + 8: Referenzbeispiele, nicht erfindungsgemäß

Aus den Ergebnissen der Flammtests wird ersichtlich, dass die Beispielschäume 7 bis 10 den CAL 117 Test zwar nicht bestehen, die Brennlänge im Vergleich zu den nicht erfindungsgemäßen Schäumen 11 bis 14 jedoch reduziert wird.

**Beispiel 15: Herstellung von Polyurethan-Verpackungsschaum**

Für den anwendungstechnischen Vergleich von erfindungsgemäßen und konventionellen Schaumstabilisatoren wurde die in Tabelle 5 angegebene Schaumformulierung eines Polyurethan-Verpackungsschaumes verwendet.

Tabelle 5: Formulierungen des Verpackungsschaumes

| Komponente | Einsatzmenge (Massenteile) |
|---|---|
| Daltolac R 251* | 52 Teile |
| Voranol CP 3322** | 23 Teile |
| Desmophen PU 21IK01*** | 20 Teile |
| Polyethylenglycol 600 | 5 Teile |
| N,N-Dimethylaminoethoxyethanol | 2,5 Teile |
| Wasser | 35 Teile |
| | |
| Stabilisator | 1 Teil |
| | |
| Desmodur 44V20L‡‡ | 226 Teile |

* Polyetherpolyol der Firma Huntsman
** Polyetherpolyol der Firma DOW
*** Polyetherpolyol der Firma Bayer
‡‡ polymeres MDI der Firma Bayer, 200 mPa*s, 31,5% NCO, Funktionalität 2,7

Die Durchführung der Vergleichsverschäumungen erfolgte im Handmischverfahren. Dazu wurden Polyole, Katalysatoren, Wasser, Zellöffner und konventioneller bzw. erfindungsgemäßer Schaumstabilisator in einen Becher eingewogen und mit einem Tellerrührer (6 cm Durchmesser) 30 s bei 1000 Upm vermischt. Jetzt wurde das MDI zugegeben, die Reaktionsmischung mit dem beschriebenen Rührer 5 s bei 2500 Upm verrührt und sofort in eine nach oben offene Holzkiste von 27 cm x 27 cm Grundfläche und 27 cm Höhe überführt, welche mit Papier ausgekleidet war. Nach 10 min wurden die Schaumstoffe entformt und analysiert. Die Zellstruktur wurden subjektiv anhand einer Skala von 1 bis 10 beurteilt, wobei 10 einen sehr feinzelligen und ungestörten Schaum und 1 einen groben, extrem stark gestörten Schaum repräsentiert. Der prozentuale Volumenanteil an offenen Zellen wurde mit einem Gerät vom Typ AccuPyc 1330 der Firma Micromeritics bestimmt. Die Dichte wurde durch Abwiegen eines 10 cm x 10 cm x 10 cm großen Schaumwürfels bestimmt.

Die verwendeten Schaumstabilisatoren und die zugehörigen Verschäumungsergebnisse sind in Tabelle 6 zusammengestellt.

Tabelle 6: Ergebnisse Verpackungsschaum

| Stabilisator | Zellstruktur | Dichte [kg/m$^3$] |
|---|---|---|
| Bsp. 1.3 | 5 | 6,8 |
| B 8863Z* | 4 | 7,1 |
| * nicht erfindungsgemäßes Vergleichsbeispiel; konventioneller Schaumstabilisator der Firma Evonik Goldschmidt (TEGOSTAB® 8863Z) | | |

Die Ergebnisse belegen, dass mit den erfindungsgemäßen Schaumstabilisatoren Polyurethan-Verpackungsschaum mit guter Zellstruktur und vergleichsweise wenigen Schaumdefekten hergestellt werden kann.

**Beispiel 16: Herstellung von Polyurethan-Sprühschaum mit niedriger Dichte**

Für den anwendungstechnischen Vergleich von erfindungsgemäßen und konventionellen Schaumstabilisatoren wurde die in Tabelle 7 angegebene Schaumformulierung eines rein Wasser-getriebenen Sprüh-Leichtschaums verwendet.

Tabelle 7: Formulierung des Sprühschaumes

| Komponente | Einsatzmenge (Massenteile) |
|---|---|
| Rizinus-Öl | 25,0 Teile |
| Stepan PS 1922* | 7,5 Teile |
| Jeffol R-470 X** | 7,0 Teile |
| Tris(1-chlor-2-propyl)phosphat | 20,0 Teile |
| PHT-4-Diol*** | 10,0 Teile |
| Tegoamine BDE‡ | 3,0 Teile |
| Tegoamine 33‡ | 2,5 Teile |
| Tegoamine DMEA‡ | 3,0 Teile |
| Wasser | 19,0 Teile |
| Stabilisator | 3,0 Teile |
| | |
| Rubinate M‡‡ | 100 Teile |
| * Polyesterpolyol der Firma Stepan<br>** Mannich-Basen-gestartetes Polyether-Polyol der Firma Huntsman<br>*** Flammschutzmittel der Firma Chemtura<br>‡ Amin-Katalysatoren der Firma Evonik Goldschmidt GmbH<br>‡‡ polymeres MDI der Firma Huntsman, 190 mPa*s, 31.2% NCO, Funktionalität 2.7 | |

Die Durchführung der Vergleichsverschäumungen erfolgte im Handmischverfahren. Dazu wurden Polyole, Katalysatoren, Wasser, Flammschutzmittel und konventioneller bzw. erfindungsgemäßer Schaumstabilisator in einen Becher eingewogen und mit einem Tellerrührer (6 cm Durchmesser) 30 s bei 1000 Upm vermischt. Jetzt wurde das MDI zugegeben, die Reaktionsmischung mit dem beschriebenen Rührer 2 s bei 3000 Upm verrührt und der Schaum anschließend im Mischbecher aufsteigen gelassen.

Nach 10 min Aushärtezeit wurde der Schaumstoff analysiert. Die Zellstruktur wurden subjektiv anhand einer Skala von 1 bis 10 beurteilt, wobei 10 einen sehr feinzelligen und ungestörten Schaum und 1 einen groben, extrem stark gestörten Schaum repräsentiert. Der prozentuale Volumenanteil an offenen Zellen wurde mit einem Gerät vom Typ AccuPyc 1330 der Firma Micromeritics bestimmt. Die Dichte wurde durch Abwiegen eines 10 cm x 10 cm x 10 cm großen Schaumwürfels bestimmt.

Alle verwendeten Schaumstabilisatoren und die zugehörigen Verschäumungsergebnisse sind in Tabelle 8 zusammengestellt.

Tabelle 8: Ergebnisse der Sprühschäume

| Stabilisator | Zellstruktur | Offenzelligkeit [%] | Dichte [kg/m$^3$] |
|---|---|---|---|
| Bsp. 0.3 | 8 | 84 | 9,3 |
| B 1048* | 7 | 88 | 11,1 |
| * nicht erfindungsgemäßes Vergleichsbeispiel; konventioneller Schaumstabilisator der Firma Evonik Goldschmidt | | | |

Mit dem erfindungsgemäßen Schaumstabilisator wird eine niedrigere Schaumdichte und eine bessere Zellstruktur bei gleich guter Offenzelligkeit erreicht, wodurch die hohe Aktivität der erfindungsgemäßen Schaumstabilisatoren zum Ausdruck kommt.

## Patentansprüche

1. Verfahren zur Herstellung von Polyurethanschäumen mit einer Dichte von kleiner 24 kg/m$^3$ bei dem ein Silikonpolyetherblock-Copolymer umfassend ein Polyorganosiloxan, welches mindestens einen Polyetherrest aufweist, eingesetzt wird, **dadurch gekennzeichnet, dass** mindestens ein nicht endverkappter Polyetherrest an das Polyorganosiloxan gebunden ist, der ein gewichtsmittleres Molgewicht von 6000 bis 8000 g/mol aufweist,
   wobei die Bestimmung der Dichte erfolgt wie in ASTM D 3574 - 08 unter Test A beschrieben,
   wobei das Molgewicht Mw durch Gelpermeationschromatographie unter den folgenden Messbedingungen bestimmt wird: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

2. Verfahren nach Anspruch 1, **dadurch gekennzeichnet, dass** Silikonpolyetherblock-Copolymere eingesetzt werden, bei denen das gewichtsmittlere Molgewicht aller an das Polyorganosiloxan chemisch gebundenen Polyetherreste größer 1500 g/mol beträgt, wobei das Molgewicht wie in Anspruch 1 angegeben bestimmt wird.

3. Verfahren nach Anspruch 1 oder 2, **dadurch gekennzeichnet, dass** ein Silikonpolyetherblock-Copolymer eingesetzt wird, bei dem mindestens ein Polyetherrest, der ein gewichtsmittleres Molgewicht von größer-gleich 4500 g/mol aufweist, und mindestens ein Polyetherrest, der ein gewichtsmittleres Molgewicht von kleiner 4500 g/mol aufweist, an das Polyorganosiloxan chemisch gebunden ist, wobei das Molgewicht wie in Anspruch 1 angegeben bestimmt wird.

4. Verfahren nach mindestens einem der Ansprüche 1 bis 3, **dadurch gekennzeichnet, dass** ein Silikonpolyetherblock-Copolymer verwendet wird, bei dem das gewichtsmittlere Molgewicht der Summe aller an das Polyorganosiloxan chemisch gebundenen Polyetherreste größer 3000 g/mol bis kleiner 5000 g/mol beträgt, wobei das Molgewicht wie in Anspruch 1 angegeben bestimmt wird.

5. Verfahren nach mindestens einem der vorangegangenen Ansprüche, **dadurch gekennzeichnet, dass** das Silikonpolyetherblock-Copolymer der Formel (I) genügt,

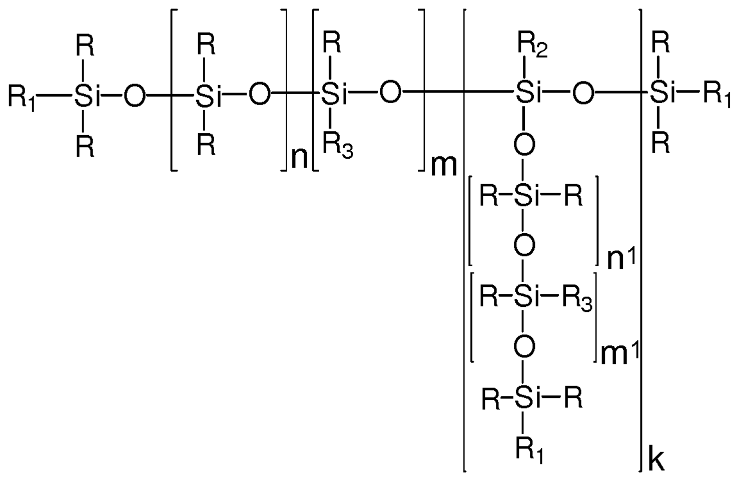 ( I )

worin

n und $n^1$ unabhängig voneinander 0 bis 500 sind und $(n+n^1) < 500$,
m und $m^1$ unabhängig voneinander 0 bis 60 sind und $(m+m^1) < 60$ ist,
k 0 bis 50 ist,
R gleiche oder ungleiche Reste aus der Gruppe umfassend lineare, cyclische oder verzweigte, aliphatische oder aromatische, gesättigte oder ungesättigte Kohlenwasserstoffreste mit 1 bis zu 20 C-Atomen,

$CH_2$- $R^{IV}$,

$CH_2$-$CH_2$-$(O)_{x'}$-$R^{IV}$,

$CH_2$-$CH_2$-$CH_2$-O-$CH_2$-CH(OH-$CH_2$OH,

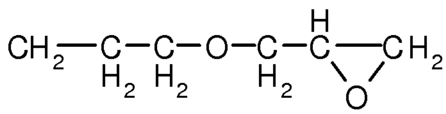

und

$CH_2$-$CH_2$-$CH_2$-O-$CH_2$-C$(CH_2OH)_2$-$CH_2$-$CH_3$,

mit

x' gleich 0 oder 1 und
$R^{IV}$ ein gegebenenfalls substituierter, gegebenenfalls mit Halogenen substituierter Kohlenwasserstoffrest mit 1 bis 50 Kohlenstoffatomen,

$R_1$ R oder $R_3$ oder $R_7$ ist,
$R_2$ R oder $R_3$ oder $R_7$ oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist,
$R_3$ -Q-O-$(CH_2\text{-}CH_2O\text{-})_x$-$(CH_2\text{-}CH(R')O\text{-})_y$-$(SO)_z$-R" oder
-Q-O-$(CH_2\text{-}CH_2O\text{-})_x$-$(CH_2\text{-}CH(R')O\text{-})_y$-R", mit

Q = zweiwertiger Kohlenwasserstoffrest mit 2 bis 4 Kohlenstoffatomen, vorzugsweise Q = -$CH_2$-$CH_2$-$CH_2$- oder -$CH_2$-$CH_2$-
x = 0 bis 200,

y = 0 bis 200,
z = 0 bis 100,
R’ eine unsubstituierte oder gegebenenfalls substituierte, beispielsweise mit Alkylresten, Arylresten oder Halogenalkyl- oder Halogenarylresten substituierte, Alkyl- oder Arylgruppe mit 1 bis 12 C-Atomen ist und R" einen Wasserstoffrest oder eine Alkylgruppe mit 1 bis 4 C-Atomen, eine Gruppe -C(O)-R’" mit R’" = Alkylrest, eine Gruppe $-CH_2-O-R'$, eine Alkylarylgruppe, eine Benzylgruppe, die Gruppe-C(O)-OR’, die Gruppe -C(O)NH-R’ bedeutet,
SO ein Styroloxid-Rest $-CH(C_6H_5)-CH_2-O-$ ist,

$R_7$ = verzweigter Polyetherrest oder Vernetzerrest, wie er sich aus Diallylverbindungen bzw. umgesetzten Diallylverbindungen ableitet,
mit der Maßgabe, dass mindestens ein Rest ein Rest $R_3$ ist und dass mindestens ein Rest $R_3$ ein Polyetherrest mit einem gewichtsmittleren Molgewicht größer-gleich 4500 g/mol, und R" = H ist und n + n1 + m + m1 größer-gleich 15 ist, wobei das Molgewicht wie in Anspruch 1 angegeben bestimmt wird.

6. Verfahren nach Anspruch 5, **dadurch gekennzeichnet, dass** bei allen Polyetherresten $R_3$ mit einem gewichtsmittleren Molgewicht größer-gleich 4500 g/mol R" gleich Wasserstoff ist, wobei das Molgewicht wie in Anspruch 1 angegeben bestimmt wird.

7. Verfahren nach Anspruch 5 oder 6, **dadurch gekennzeichnet, dass** alle Polyetherreste R3 mit einem gewichtsmittleren Molgewicht kleiner 4500 g/mol R" ungleich Wasserstoff ist, wobei das Molgewicht wie in Anspruch 1 angegeben bestimmt wird.

8. Verfahren nach einem der vorangegangenen Ansprüche, **dadurch gekennzeichnet, dass** eine Zusammensetzung enthaltend ein oder mehrere Silikonpolyether-Copolymere sowie des weiteren eine oder mehrere bei der Herstellung von Polyurethanschäumen verwendbare Substanz, ausgewählt aus Nukleierungsmitteln, zellverfeinernden Additiven, Zellöffnern, Vernetzern, Emulgatoren, Flammschutzmitteln, Antioxidantien, Antistatika, Bioziden, Farbpasten, festen Füllstoffen, Aminkatalysatoren, Metallkatalysatoren und Puffersubstanzen, eingesetzt wird.

9. Verfahren nach Anspruch 8, **dadurch gekennzeichnet, dass** die Zusammensetzung ein oder mehrere Lösungsmittel, vorzugsweise ausgewählt aus Glykolen, Alkoxylaten oder Ölen synthetischer und/oder natürlicher Herkunft, enthält.

10. Verfahren nach einem der vorangegangenen Ansprüche, **dadurch gekennzeichnet, dass** das Silikonpolyetherblock-Copolymer als Schaumstabilisator eingesetzt wird.

11. Verfahren nach einem der vorangegangenen Ansprüche, **dadurch gekennzeichnet, dass** bei der Herstellung des Polyurethanschaums Wasser, Methylenchlorid, Pentan, Alkane, Cyclopentan, halogenierte Alkane, Aceton oder Kohlendioxid als Treibmittel eingesetzt wird.

12. Polyurethanschaum erhältlich durch ein Verfahren gemäß einem der Ansprüche 1 bis 11.

13. Polyurethanschaum enthaltend ein Silikonpolyetherblock-Copolymer wie in einem der Ansprüche 1 bis 11 definiert.

14. Artikel enthaltend oder bestehend aus einem Polyurethanschaum gemäß Anspruch 12 oder 13.

**Claims**

1. Process for production of polyurethane foams having a density of below 24 $kg/m^3$, which comprises utilizing a silicone-polyether block copolymer comprising a polyorganosiloxane which includes at least one polyether moiety, **characterized in that** the polyorganosiloxane has attached to it at least one non-endcapped polyether moiety having a weight average molecular weight in the range from 6000 to 8000 g/mol,
wherein the density is determined as described under Test A in ASTM D 3574-08,
wherein the molecular weight Mw is determined by gel permeation chromatography under the following conditions of measurement: column combination SDV 1000/10 000 Å (length 65 cm), temperature 30°C, THF as mobile phase, flow rate 1 ml/min, sample concentration 10 g/l, RI detector, evaluation against polypropylene glycol standard.

**2.** Process according to Claim 1, **characterized in that** it utilizes silicone-polyether block copolymers in which the weight average molecular weight of all polyether moieties attached to the polyorganosiloxane by chemical bonding is above 1500 g/mol, wherein the molecular weight is determined as specified in Claim 1.

**3.** Process according to Claim 1 or 2, **characterized in that** it utilizes a silicone-polyether block copolymer in which the polyorganosiloxane has attached to it by chemical bonding at least one polyether moiety having a weight average molecular weight of not less than 4500 g/mol and at least one polyether moiety having a weight average molecular weight of below 4500 g/mol, wherein the molecular weight is determined as specified in Claim 1.

**4.** Process according to at least one of Claims 1 to 3, **characterized in that** it uses a silicone-polyether block copolymer in which the weight average molecular weight of the sum total of all polyether moieties attached to the polyorganosiloxane by chemical bonding is in the range from above 3000 g/mol to below 5000 g/mol, wherein the molecular weight is determined as specified in Claim 1.

**5.** Process according to at least one preceding claim, **characterized in that** the silicone-polyether block copolymer satisfies formula (I),

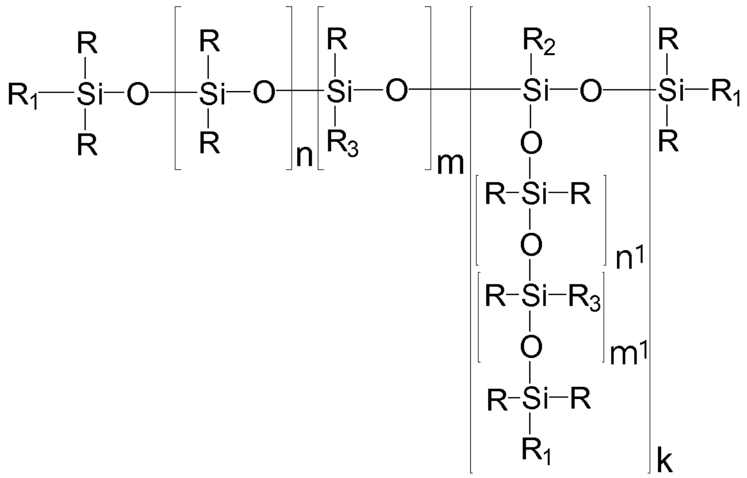

(I)

where

n and $n^1$ are each independently from 0 to 500 and $(n+n^1)$ is < 500,
m and $m^1$ are each independently from 0 to 60 and $(m+m^1)$ is < 60,
k is from 0 to 50,
R represents alike or unalike moieties from the group comprising linear, cyclic or branched, aliphatic or aromatic, saturated or unsaturated hydrocarbon moieties having from 1 up to 20 carbon atoms,

$CH_2$-$R^{IV}$,

$CH_2$-$CH_2$-$(O)_{x'}$-$R^{IV}$,

$CH_2$-$CH_2$-$CH_2$-O-$CH_2$-CH(OH)-$CH_2$OH,

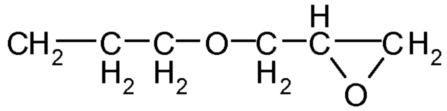

and

$CH_2$-$CH_2$-$CH_2$-O-$CH_2$-C($CH_2$OH)$_2$-$CH_2$-$CH_3$,

where

x' is 0 or 1 and
$R^{IV}$ is an optionally substituted, optionally halogen-substituted hydrocarbon moiety having 1 to 50 carbon atoms,

$R_1$ is R or $R_3$ or $R_7$,
$R_2$ is R or $R_3$ or $R_7$ or a heteroatom-substituted, functional, organic, saturated or unsaturated moiety, preferably selected from the group of alkyl, chloroalkyl, chloroaryl, fluoroalkyl, cyanoalkyl, acryloyloxyaryl, acryloyloxyalkyl, methacryloyloxyalkyl, methacryloyloxypropyl or vinyl moieties, more preferably a methyl, chloropropyl, vinyl or methacryloyloxypropyl moiety,
$R_3$ is $-Q-O-(CH_2-CH_2O-)_x-(CH_2-CH(R')O-)_y-(SO)_z-R''$
or

$$-Q-O-(CH_2-CH_2O-)_x-(CH_2-CH(R')O-)_y-R'',$$

where

Q = divalent hydrocarbon moiety having 2 to 4 carbon atoms, preferably Q = $-CH_2-CH_2-CH_2-$ or $-CH_2-CH_2-$
x = 0 to 200,
y = 0 to 200,
z = 0 to 100,
R' is an alkyl or aryl group which has 1 to 12 carbon atoms and is unsubstituted or optionally substituted, for example with alkyl moieties, aryl moieties or haloalkyl or haloaryl moieties, and
R'' is a hydrogen moiety or an alkyl group having 1 to 4 carbon atoms, a -C(O)-R''' group where R''' = alkyl, a $-CH_2-O-R'$ group, an alkylaryl group, a benzyl group, the -C(O)-OR' group, the -C(O)NH-R' group,
SO is a styrene oxide moiety $-CH(C_6H_5)-CH_2-O-$,

$R_7$ = branched polyether moiety or crosslinker moiety as derives from diallyl compounds or converted diallyl compounds,
with the proviso that at least one moiety is an $R_3$ moiety and at least one $R_3$ moiety is a polyether moiety having a weight average molecular weight of not less than 4500 g/mol, and R'' is = H and n + n1 + m + m1 is not less than 15, wherein the molecular weight is determined as specified in Claim 1.

6. Process according to Claim 5, **characterized in that** R'' is hydrogen for all polyether moieties $R_3$ having a weight average molecular weight not less than 4500 g/mol, wherein the molecular weight is determined as specified in Claim 1.

7. Process according to Claim 5 or 6, **characterized in that** R'' is other than hydrogen for all polyether moieties $R_3$ having a weight average molecular weight below 4500 g/mol, wherein the molecular weight is determined as specified in Claim 1.

8. Process according to any preceding claim, **characterized in that** it utilizes a composition containing one or more silicone-polyether copolymers and also, furthermore, one or more substances useful in the production of polyurethane foams and selected from nucleating agents, cell-refining additives, cell openers, crosslinkers, emulsifiers, flame retardants, antioxidants, antistats, biocides, colour pastes, solid fillers, amine catalysts, metal catalysts and buffer substances.

9. Process according to Claim 8, **characterized in that** the composition contains one or more solvents, preferably selected from glycols, alkoxylates or oils of synthetic and/or natural origin.

10. Process according to any preceding claim, **characterized in that** the silicone-polyether block copolymer is used as foam stabilizer.

11. Process according to any preceding claim, **characterized in that** the polyurethane foam is produced utilizing water, methylene chloride, pentane, alkanes, cyclopentane, halogenated alkanes, acetone or carbon dioxide as blowing agent.

**12.** Polyurethane foam obtainable by a process according to any one of Claims 1 to 11.

**13.** Polyurethane foam containing a silicone-polyether block copolymer as defined in any one of Claims 1 to 11.

**14.** Article containing or consisting of a polyurethane foam according to Claim 12 or 13.

**Revendications**

**1.** Procédé pour la préparation de mousses de polyuréthane présentant une densité inférieure à 24 kg/$m^3$ dans lequel un copolymère séquencé de silicone-polyéther, comprenant un polyorganosiloxane qui présente au moins un radical polyéther, est utilisé, **caractérisé en ce qu'**au moins un radical polyéther à extrémités non bloquées est lié au polyorganosiloxane, qui présente un poids moléculaire moyen en poids de 6000 à 8000 g/mole, la détermination de la densité ayant lieu comme décrit dans la norme ASTM D 3574-08 sous le Test A, le poids moléculaire Mw étant déterminé par chromatographie par perméation de gel dans les conditions de mesure suivantes : combinaison de colonnes SDV 1000/10.000 Å (longueur 65 cm), température 30°C, THF comme phase mobile, débit 1 ml/min, concentration de l'échantillon 10 g/l, détecteur RI, évaluation par rapport au témoin polypropylèneglycol.

**2.** Procédé selon la revendication 1, **caractérisé en ce qu'**on utilise des copolymères séquencés de silicone-polyéther dans lesquels le poids moléculaire moyen en nombre de tous les radicaux polyéther liés chimiquement au polyorganosiloxane est supérieur à 1500 g/mole, le poids moléculaire étant déterminé comme indiqué dans la revendication 1.

**3.** Procédé selon la revendication 1 ou 2, **caractérisé en ce qu'**on utilise un copolymère séquencé de silicone-polyéther dans lequel au moins un radical polyéther, qui présente un poids moléculaire moyen en nombre supérieur ou égal à 4500 g/mole et au moins un radical polyéther qui présente un poids moléculaire moyen en nombre inférieur à 4500 g/mole sont liés chimiquement au polyorganosiloxane, le poids moléculaire étant déterminé comme indiqué dans la revendication 1.

**4.** Procédé selon au moins l'une quelconque des revendications 1 à 3, **caractérisé en ce qu'**on utilise un copolymère séquencé de silicone-polyéther dans lequel le poids moléculaire moyen en nombre de l'ensemble de tous les radicaux polyéther liés chimiquement au polyorganosiloxane est supérieur à 3000 g/mole jusqu'à inférieur à 5000 g/mole, le poids moléculaire étant déterminé comme indiqué dans la revendication 1.

**5.** Procédé selon au moins l'une quelconque des revendications précédentes, **caractérisé en ce que** le copolymère séquencé de silicone-polyéther satisfait à la formule (I),

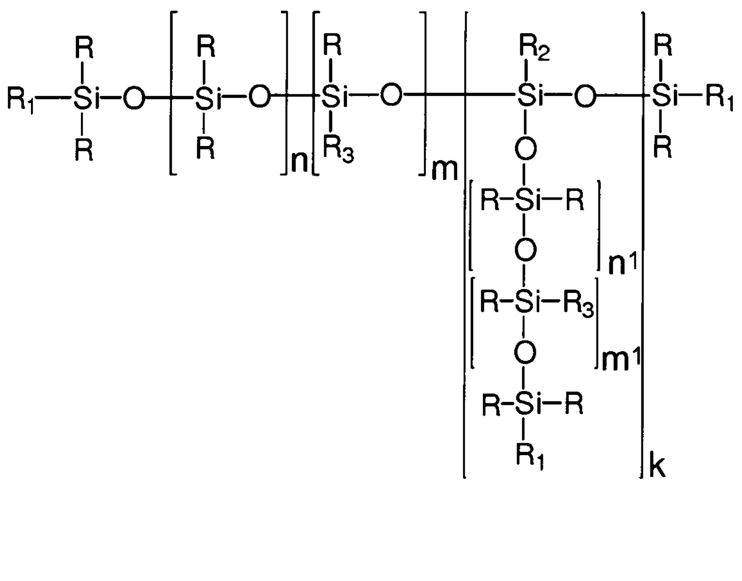

(I)

dans laquelle

n et $n^1$ valent, indépendamment l'un de l'autre, 0 à 500 et $(n+n^1) < 500$,
m et $m^1$ valent, indépendamment l'un de l'autre, 0 à 60 et $(m+m^1) < 60$,

k vaut 0 à 50,
R représente des radicaux identiques ou différents du groupe comprenant les radicaux hydrocarbonés linéaires, cycliques ou ramifiés, aliphatiques ou aromatiques, saturés ou insaturés comprenant 1 à 20 atomes de carbone,

$CH_2-R^{IV}$,

$CH_2-CH_2-(O)_{x'}-R^{IV}$,

$CH_2-CH_2-CH_2-O-CH_2-CH(OH)-CH_2OH$,

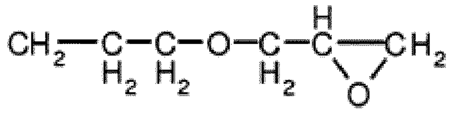

et

$CH_2-CH_2-CH_2-O-CH_2-C(CH_2OH)_2-CH_2-CH_3$.

où

x' vaut 0 ou 1 et
$R^{IV}$ représente un radical hydrocarboné le cas échéant substitué, le cas échéant substitué par des halogènes, comprenant 1 à 50 atomes de carbone,

$R_1$ représente R ou $R_3$ ou $R_7$,
$R_2$ représente R ou $R_3$ ou $R_7$ ou un radical saturé ou insaturé, organique, fonctionnel, substitué par des hétéroatomes, de préférence choisi dans le groupe constitué par les radicaux alkyle, chloroalkyle, chloroaryle, fluoroalkyle, cyanoalkyle, acryloxyaryle, acryloxyalkyle, méthacryloxyalkyle, méthacryloxypropyle ou vinyle, de manière particulièrement préférée un radical méthyle, chloropropyle, vinyle ou méthacryloxypropyle,
$R_3$ représente $-Q-O-(CH_2-CH_2O-)_x-(CH_2-CH(R')O-)_y-(SO)_z-R''$ ou

$-Q-O-(CH_2-CH_2O-)_x-(CH_2-CH(R')O-)_y-R''$,

où

Q = un radical hydrocarboné divalent comprenant 2 à 4 atomes de carbone, de préférence Q = $-CH_2-CH_2-CH_2-$ ou $-CH_2-CH_2-$,
x = 0 à 200,
y = 0 à 200,
z = 0 à 100,
R' signifie un groupe alkyle ou aryle non substitué ou le cas échéant substitué, par exemple par des radicaux alkyle, des radicaux aryle ou des radicaux halogénoalkyle ou halogénoaryle, comprenant 1 à 12 atomes de carbone et
R'' signifie un radical hydrogène ou un groupe alkyle comprenant 1 à 4 atomes de carbone, un groupe -C(O)-R''' où R''' = radical alkyle, un groupe $-CH_2-O-R'$, un groupe alkylaryle, un groupe benzyle, le groupe -C(O)-OR', le groupe -C(O)NH-R',
SO représente un radical oxyde de styrène $-CH(C_6H_5)-CH_2-O-$,

$R_7$ = un radical polyéther ramifié ou un radical de réticulant dérivé de composés diallyle ou de composés diallyle transformés,

étant entendu qu'au moins un radical est un radical $R_3$ et qu'au moins un radical $R_3$ est un radical polyéther présentant un poids moléculaire moyen en nombre supérieur ou égal à 4500 g/mole, et R'' = H et $n + n^1 + m + m^1$ est supérieur ou égal à 15, le poids moléculaire étant déterminé comme indiqué dans la revendication 1.

6. Procédé selon la revendication 5, **caractérisé en ce que**, pour tous les radicaux polyéther $R_3$ présentant un poids

moléculaire moyen en nombre supérieur ou égal à 4500 g/mole, R" représente hydrogène, le poids moléculaire étant déterminé comme indiqué dans la revendication 1.

**7.** Procédé selon la revendication 5 ou 6, **caractérisé en ce que**, pour tous les radicaux polyéther $R_3$ présentant un poids moléculaire moyen en nombre inférieur à 4500 g/mole, R" est différent d'hydrogène, le poids moléculaire étant déterminé comme indiqué dans la revendication 1.

**8.** Procédé selon l'une quelconque des revendications précédentes, **caractérisé en ce qu'**on utilise une composition contenant un ou plusieurs copolymères de silicone-polyéther ainsi qu'en outre une ou plusieurs substances pouvant être utilisées lors de la préparation de mousses de polyuréthane, choisies parmi les agents de nucléation, les additifs de réduction des pores, les agents d'ouverture des pores, les réticulants, les émulsifiants, les agents ignifuges, les antioxydants, les antistatiques, les biocides, les pâtes colorantes, les charges solides, les catalyseurs de type amine, des catalyseurs métalliques et les substances tampon.

**9.** Procédé selon la revendication 8, **caractérisé en ce que** la composition contient un ou plusieurs solvants, de préférence choisis parmi les glycols, les alcoxylates ou les huiles d'origine synthétique et/ou naturelle.

**10.** Procédé selon l'une quelconque des revendications précédentes, **caractérisé en ce que** le copolymère séquencé de silicone-polyéther est utilisé comme stabilisant de mousse.

**11.** Procédé selon l'une quelconque des revendications précédentes, **caractérisé en ce que**, lors de la préparation de la mousse de polyuréthane, on utilise de l'eau, du chlorure de méthylène, du pentane, des alcanes, du cyclopentane, des alcanes halogénés, de l'acétone ou du dioxyde de carbone comme agent gonflant.

**12.** Mousse de polyuréthane, pouvant être obtenue par un procédé selon l'une quelconque des revendications 1 à 11.

**13.** Mousse de polyuréthane contenant au moins un copolymère séquencé de silicone-polyéther tel que défini dans l'une quelconque des revendications 1 à 11.

**14.** Article contenant ou constitué par une mousse de polyuréthane selon la revendication 12 ou 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0493836 A1
- US 5565194 A
- EP 1350804 A
- US 5856369 A
- US 5877268 A
- EP 0712884 A
- US 20090253817 A1
- CN 101099926 A
- CN 101099926
- EP 0585771 A2
- US 2003203984 A1
- EP 1439200 B1
- DE 102007055485 A1
- DE 102007057145 A1
- EP 0152878 A1
- EP 0409035 A2
- DE 102005050473 A1
- DE 19629161 A1
- DE 3508292 A1
- DE 4444898 A1
- EP 1061095 A1
- EP 0532939 B1
- EP 0867464 B1
- EP 1683831 A1
- DE 102007046860 A1
- WO 2009065644 A


### In der Beschreibung aufgeführte Nicht-Patentliteratur


- Polyurethane. Kunststoff-Handbuch. Carl-Hanser-Verlag, 1966, vol. 7
- KUNSTSTOFF-HANDBUCH. 1983
- KUNSTSTOFF-HANDBUCH. 1993
- Stichwort Polyurethanes. Ullmann’s Encyclopedia of Industrial Chemistry. Wiley-VCH Verlag GmbH & Co. KGaA, 15. Januar 2005